Europäisches Patentamt

European Patent Office

Office européen des brevets

(11) Veröffentlichungsnummer: **0 204 933**
**B1**

(12) **EUROPÄISCHE PATENTSCHRIFT**

(45) Veröffentlichungstag der Patentschrift:
**20.04.88**

(51) Int. Cl.⁴: **B 65 D 85/10**

(21) Anmeldenummer: **86105578.8**

(22) Anmeldetag: **22.04.86**

(54) **Klappdeckelschachtel für Zigaretten oder dgl.**

(30) Priorität: **02.05.85 DE 3515775**
**25.06.85 DE 3522614**

(43) Veröffentlichungstag der Anmeldung:
**17.12.86 Patentblatt 86/51**

(45) Bekanntmachung des Hinweises auf die Patenterteilung:
**20.04.88 Patentblatt 88/16**

(84) Benannte Vertragsstaaten:
**DE FR GB IT NL SE**

(56) Entgegenhaltungen:
**DE - A - 2 940 797**

(73) Patentinhaber: **Focke & Co. (GmbH & Co.),**
**Siemensstrasse 10, D-2810 Verden (DE)**

(72) Erfinder: **Focke, Heinz, Moorstrasse 64, D-2810 Verden (DE)**
Erfinder: **Liedtke, Kurt, Trift 18, D-2810 Verden (DE)**

(74) Vertreter: **Bolte, Erich, Dipl.-Ing. et al, Hollerallee 73, D-2800 Bremen (DE)**

ACTORUM AG

## Beschreibung

Die Erfindung betrifft eine Klappschachtel aus faltbarem Material, wie Karton oder dgl., mit im wesentlichen quaderförmiger Gestalt, insbesondere zur Aufnahme einer in einen Innenzuschnitt eingehüllten Zigaretten-Gruppe (Stanniolblock), mit einem Schachteilteil und an einer Rückwand desselben angelenktem Klappdeckel, der in Schliessstellung einen mit dem Schachtelteil verbundenen Kragen umfasst.

Der vorliegende Verpackungstyp wird auch als Hinge-Lid-Packung bezeichnet. Aufgrund des verhältnismässig festen Verpackungsmaterials (dünner Karton) sind derartige Verpackungen verhältnismässig formstabil. Längs- und Querkanten der Klappschachtel zur Begrenzung von Wänden sind bisher ausschliesslich scharfkantig ausgebildet.

Dies ist auch ein Grund für den beträchtlichen Materialaufwand für diesen in der Praxis beliebten Verpackungstyp.

Der Erfindung liegt die Aufgabe zugrunde, eine Klappschachtel der eingangs genannten Ausführung unter Aufrechterhaltung des konstruktiven Aufbaus und der Funktionalität so auszubilden, dass der Materialaufwand gegenüber herkömmlichen Klappschachteln reduziert ist.

Zur Lösung dieser Aufgabe ist die erfindungsgemässe Klappschachtel dadurch gekennzeichnet, dass (aufrechte) Längskanten des Schachtelteils, des Klappdeckels und des Kragens unter Anpassung an den Durchmesser der Zigaretten abgeschrägt ausgebildet sind, derart, dass die Klappschachtel einen achteckigen, gleichwinkligen Querschnitt aufweist.

Die abgeschrägten Längskanten bewirken eine Materialeinsparung zunächst dadurch, dass sich die Klappschachtel eng und nahezu formschlüssig an die äussere Kontur des Packungsinhalts, nämlich der Zigaretten-Gruppe, anschmiegt.

Des weiteren wird eine Materialeinsparung dadurch erzielt, dass innere und äussere Seitenlappen und Deckelseitenlappen mit geringerer Breite ausgebildet sind als bei konventionellen Klappschachtel. Diese schmaleren Seitenlappen und Deckelseitenlappen liegen zur Bildung von Seitenwänden und Deckelseitenwänden nur im Bereich ausserhalb der Abschrägung der Längskanten aneinander.

Vorteilhaft ist aber auch die Handhabung der Packung, da sich diese aufgrund der abgeschrägten Längskanten angenehmer erfassen lässt.

Nach einem weiteren Vorschlag ist der Kragen im Bereich der Abschrägung mit einer durch Stanzung gebildeten Verriegelungslasche ausgestattet, die geringfügig über die Seitenkonturen des Kragens hinwegragt und in Schliessstellung des Klappdeckels hinter eine Kante des inneren Deckelseitenlappens fasst. Zum Öffnen der Klappschachtel durch Zurückschwenken des Klappdeckels wird die Verriegelungslasche verformt, so dass der Deckel in üblicher Weise betätigt werden kann.

Weitere Merkmale der Erfindung betreffen die Ausgestaltung der Klappschachtel und deren Herstellung.

Ausführungsbeispiele einer Klappschachtel werden nachfolgend anhand der Zeichnungen erläutert. Es zeigt:

Fig. 1 eine Klappschachtel mit abgeschrägten Längskanten in perspektivischer Darstellung,

Fig. 2 einen Zuschnitt für eine Klappschachtel gemäss Fig. 1 in einer Zwischenfaltstellung, ebenfalls perspektivisch,

Fig. 3 einen Querschnitt zu dem Zuschnitt gemäss Fig. 2,

Fig. 4 die Anordnung von Zuschnitten für eine Klappschachtel gemäss Fig. 1 innerhalb eines Nutzens des Verpackungsmaterials,

Fig. 5 den oberen Teil der Klappschachtel in Seitenansicht, in geschlossener Stellung, bei vergrössertem Massstab,

Fig. 6 eine Darstellung entsprechend Fig. 5 während einer Öffnungsphase des Klappdeckels,

Fig. 7 einen Kragen als Detail der Klappschachtel gemäss Fig. 1, ebenfalls in perspektivischer Darstellung.

Die dargestellte Klappschachtel aus dünner Papper bzw. dünnem Karton dient zur Aufnahme von Zigaretten, nämlich einer Zigaretten-Gruppe, die in einen Innenzuschnitt, insbesondere in einen Stanniolzuschnitt, eingehüllt ist (nicht dargestellt). Der annähernd quaderförmige Stanniolblock findet passend, formschlüssig Aufnahme in der Klappschachtel.

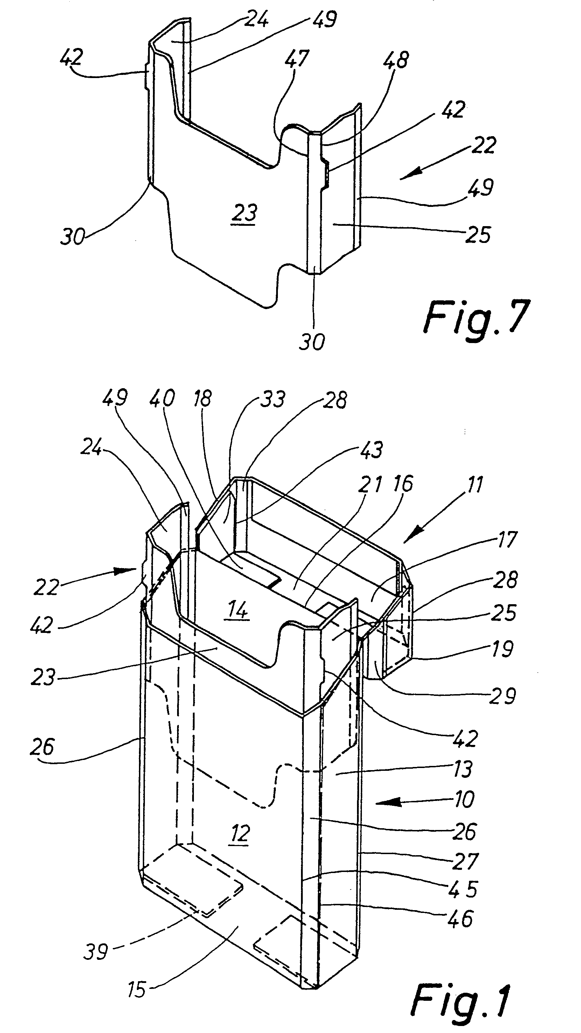

Gemäss Fig. 1 besteht die Klappschachtel aus einem Schachtelteil 10 und einem Klappdeckel 11. Ersterer wird durch eine Vorderwand 12, Seitenwände 13, Rückwand 14 sowie Bodenwand 15 gebildet. Der Klappdeckel 11 ist im Bereich einer Scharnierlinie 16 mit der Rückwand 14 verbunden.

Der Klappdeckel 11 besteht analog zum Schachtelteil 10 aus einer Deckelvorderwand 17, Deckelseitenwänden 18 und 19, einer Deckelrückwand 20 (in Verbindung mit der Rückwand 14 des Schachtelteils 10) und einer Deckeloberwand 21.

Im Sinne konventioneller Gestaltung einer Klappschachtel ist in den Schachtelteil 10 ein Kragen 22 eingesetzt, der aus Kragenvorderwand 23 und Kragenseitenwänden 24 und 25 besteht. Der untere Teil des Kragens 22 ist mit der Vorderwand 12 und den Seitenwänden 13 verbunden. Ein oberer Bereich ragt aus dem Schachtelteil 10 heraus und wird in Schliessstellung durch den Klappdeckel 11 umschlossen.

Aufrechte Längskanten 26, 27 des Schachtelteils 10 sowie in Verlängerung derselben verlaufende Deckellängskanten 28 und 29 und vordere Kragenlängskanten 30 sind abgeschrägt und zwar derart, dass sich die Packung im Bereich der aufrechten Längskanten platzsparend an den Packungsinhalt, nämlich einen Stanniolblock (in einen Stanniol-Zuschnitt eingehüllte Zigaretten-Gruppe) anschmiegt.

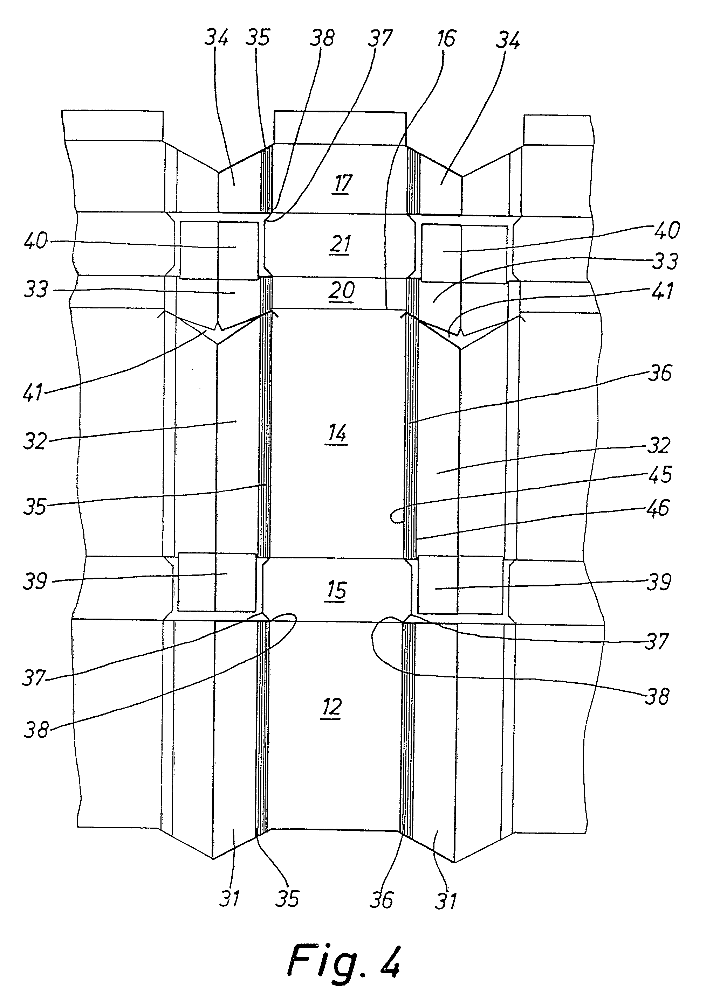

Eine Klappschachtel mit in diesem Sinne abgeschrägten, aufrechten Längskanten 26...29 kann beispielsweise aus einem Zuschnitt gemäss Fig. 4 gefertigt werden. Aufgrund des Seitenschluss-Konstruktionsprinzips der Klappschachtel werden die Seitenwände 13 durch einander überdeckende Seitenlappen 31 und 32 gebildet. Für die Deckelseitenwände 18 und 19 sind entsprechend ausgebildete Deckelseitenlappen 33 im Bereich der Deckelrückwand 20 sowie Deckelseitenlappen 34 im Bereich der Deckelvorderwand 17 vorgesehen. Zwischen den Seitenlappen 31...34 einerseits und den benachbarten Wänden der Klappschachtel bzw. des Zuschnitts (Fig. 4) ist ein Materialstreifen 35 bzw. 36 vorgesehen. Dieser wird «über Eck» gefaltet, so dass jede Längskante 26, 27 bzw. jede Deckellängskante 28, 29 aus zwei Einzelkanten 45, 46 gebildet ist.

Die Seitenlappen 31, 32 und Deckelseitenlappen 33, 34 erhalten dadurch eine geringere Breite als die Gesamtbreite der Klappschachtel selbst, nämlich vermindert um die Abmessung der Abschrägungen bzw. der Materialstreifen 35, 36. Die einander zugeordneten Seitenlappen 31 und 32 bzw. Deckelseitenlappen 33 und 34 überdecken einander vollflächig im Bereich zwischen den Einzelkanten 45, 46.

Die Bodenwand 15 und die Deckeloberwand 21 sind mit korrespondierend abgeschrägten Ecken unter Bildung von jeweils zwei Einzelecken 37, 38 ausgebildet, die passend formschlüssig unten und oben an die abgeschrägten Längskanten 26, 27 bzw. Deckellängskanten 28, 29 stossen.

An den innen liegenden Seitenlappen 32 sowie den ebenfalls innen liegenden Deckelseitenlappen 33 sind, wie grundsätzlich bekannt, Bodenecklappen 39 bzw. Deckelecklappen 40 angebracht. Diese liegen bei der fertig gefalteten Klappschachtel an der Innenseite der Bodenwand 15 bzw. der Deckeloberwand 21 an. Bei der vorliegenden Gestaltung der Klappschachtel sind die Bodenecklappen 39 und die Deckelecklappen 40 mit geringerer Breite ausgebildet als die Gesamtbreite der Klappschachtel, nämlich etwa so breit wie die Seitenlappen 32 und Deckelseitenlappen 33 zwischen den einander benachbarten Einzelkanten 45, 46.

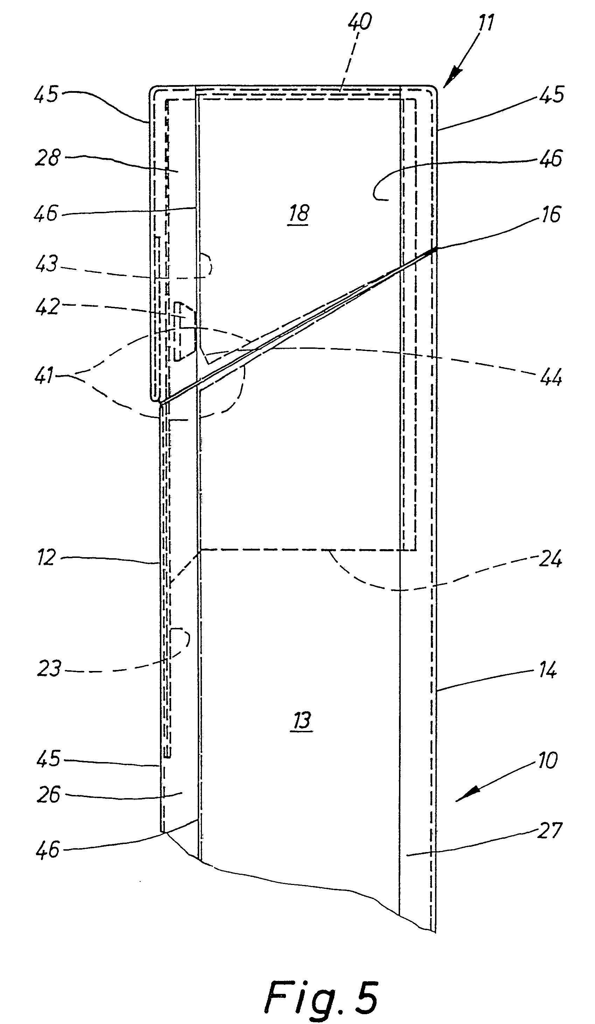

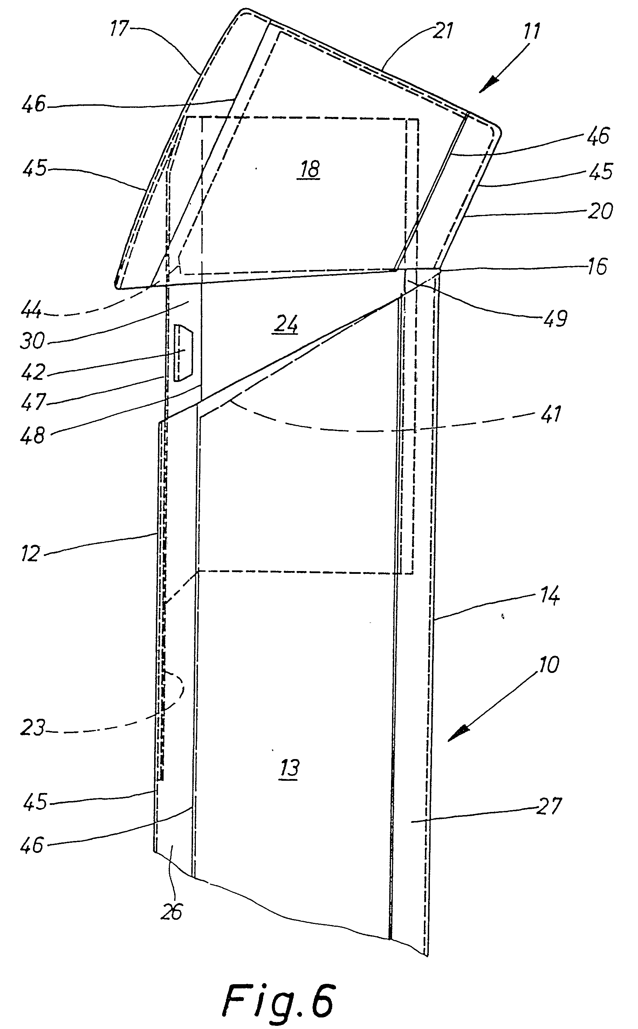

Des weiteren ist im vorliegenden Fall durch eine keilförmige Stanzung 41 zwischen den innen liegenden Seitenlappen 32 und Deckelseitenlappen 33 bewirkt, dass diese gegenüber den zugeordneten aussen liegenden Seitenlappen 31 bzw. Deckelseitenlappen 34 nach oben und unten zurückspringen (Fig. 5 und 6). Durch diesen Versatz zwischen den inneren und äusseren Seitenlappen 31...34 werden etwaige ungenaue Relativstellungen zwischen den aneinander liegenden Seitenlappen ausgeglichen.

Die Klappschachtel ist mit einer Verriegelung für die Sicherung bzw. Stabilisierung der Schliessstellung des Klappschachtels 11 versehen. Zu diesem Zweck ist der Kragen 22 im seitlichen Bereich, nämlich im Bereich der Kragenlängskanten 30, mit einer Verriegelungslasche 42 versehen, die in Wirkstellung geringfügig über die Konturen des Kragens 22 hinwegragt. Die Verriegelungslasche 42 wird durch annähernd U-förmige Stanzung im Bereich des Übergangs zwischen Kragenseitenwand 24, 25 und Kragenvorderwand 23 gebildet. Die so entstehende und vorspringende Verriegelungslasche 42 befindet sich in einer Stellung, in der bei geschlossenem Klappdeckel 11 eine Vorderkante 43 des inneren Deckelseitenlappens 33 hinter die Verriegelungslasche 42 fasst bzw. von dieser beaufschlagt wird in Richtung auf die Schliessstellung. Zum Öffnen der Klappschachtel wird der Klappdeckel 11 in üblicher Weise verschwenkt, wobei die Vorderkante 43 des Deckelseitenlappens 33 die durch die Verriegelungslasche 42 ausgeübte Rückhaltekraft überwindet. Um diesen Öffnungsvorgang zu erleichtern, ist gemäss Fig. 5 und 6 im Bereich der unteren, vorderen Ecke des inneren Deckelseitenlappens 33 eine Abschrägung 44 gebildet.

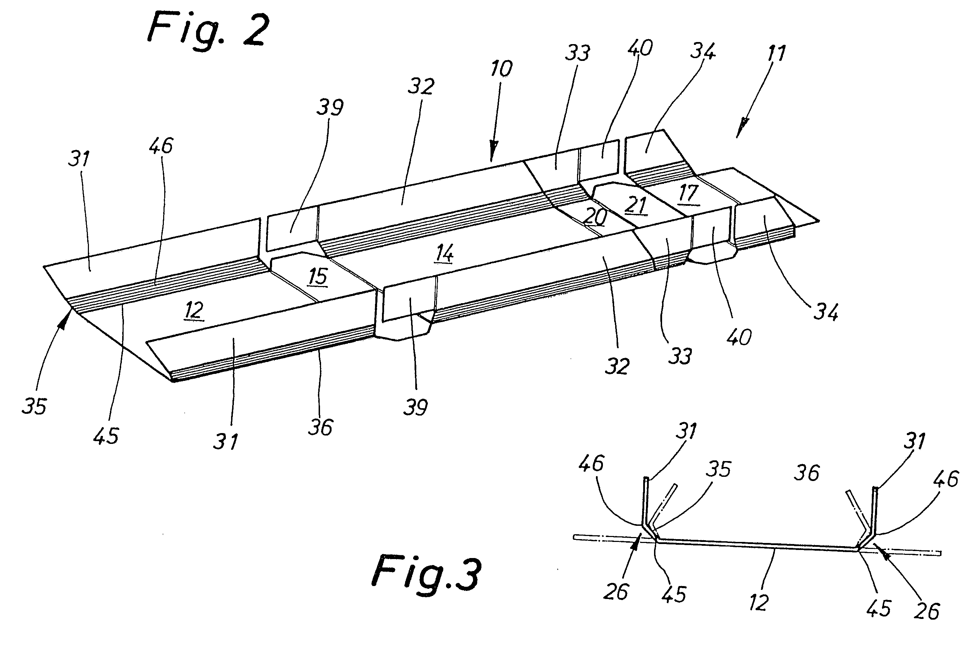

Bei der Herstellung einer Klappschachtel in der vorliegenden Ausführung mit polygonalen Längskanten 26...29 wird gemäss Fig. 2 und 3 in der Weise vorgegangen, dass der langgestreckte, einstückige Zuschnitt zunächst in bezug auf die Abschrägungen der Längskanten 26...29 vorgeformt wird. Der Zuschnitt erhält dadurch im Querschnitt eine im wesentlichen U-förmige Gestalt. Die aufgerichteten Seitenlappen werden dabei so weit nach innen verformt, dass sie infolge der Rückstellkräfte eine aufrechte Position einnehmen. Nach der Formung der abgeschrägten Längskanten 26...29 wird der Zuschnitt der weiteren Faltung sowie Füllung zugeführt.

Die konstruktiven Einzelheiten des Kragens 22 ergeben sich aus Fig. 7. Die Kragenlängskanten 30 sind durch Abschrägung so ausgebildet, dass korrespondierend zum Schachtelteil 10 Krageneinzelkanten 47, 48 entstehen. Darüber hinaus ist an der Rückseite der Kragenseitenwände 24, 25 jeweils ein Randstreifen 49 abgewinkelt angebracht, und zwar unter Anpassung an die rückseitigen abgeschrägten Längskanten 27 bzw. Deckellängskanten 29. Der abgewinkelte Randstreifen 49 verleiht dem Kragen eine grössere Formstabilität.

## Patentansprüche

1. Klappschachtel aus faltbarem Material, wie Karton oder dgl., mit im wesentlichen quaderförmiger Gestalt, insbesondere zur Aufnahme einer in einen Innenzuschnitt eingehüllten Zigaretten-Gruppe, mit einem Schachtelteil (10) und an einer Rückwand desselben angelenktem Klappdeckel (11), der in Schliessstellung einen mit dem Schachtelteil verbundenen Kragen (22) umfasst, dadurch gekennzeichnet, dass Längskanten (26, 27; 28, 29; 30) des Schachtelteils (10), des Klappdeckels (11) und des Kragens (22) unter Anpassung an den Durchmesser der Zigaretten abgeschrägt ausgebildet sind, derart, dass die Klappschachtel einen achteckigen, gleichwinkligen Querschnitt aufweist.

2. Klappschachtel nach Anspruch 1, dadurch gekennzeichnet, dass eine Bodenwand (15) und eine Deckeloberwand (21) mit abgeschrägten Ekken (Einzelecken 37, 38) nach Massgabe der Abschrägung der Längskanten (26...29) und ohne Verbindung mit diesen formschlüssig an die zugeordneten Wände stumpf anstossen.

3. Klappschachtel nach Anspruch 1 oder 2, dadurch gekennzeichnet, dass Seitenwände (13) bzw. Deckelseitenwände (18, 19) aus übereinander liegenden Seitenlappen (31, 32) bzw. Deckelseitenlappen (33, 34) gebildet sind, die in ihrer Breite so bemessen sind, dass sie sich wechselseitig nur im Bereich zwischen benachbarten Einzelkanten (45, 46) der Längskanten (26...29) überdecken.

4. Klappschachtel nach Anspruch 1 sowie einem oder mehreren der weiteren Ansprüche, dadurch gekennzeichnet, dass an die (innen liegenden) Seitenlappen (32) anschliessende Deckelseitenlappen (33) anschliessende Deckelecklappen (40) mit geringerer Breite ausgebildet sind als die Breite der Bodenwand (15) bzw. Deckeloberwand (21), nämlich entsprechend der Breite der Seitenlappen (31) bzw. Deckelseitenlappen (33) zwischen den Einzelkanten (45, 46) der Längskanten (26...29).

5. Klappschachtel nach Anspruch 1 sowie einem oder mehreren der weiteren Ansprüche, dadurch gekennzeichnet, dass innen liegende Seitenlappen (31) bzw. Deckelseitenlappen (33) durch keilförmige (Doppel-)Stanzung (41) einen Abstand voneinander aufweisen, derart, dass obere bzw. untere Ränder der innen liegenden Seitenlappen (31) bzw. Deckelseitenlappen (33) gegenüber den Rändern der aussen liegenden Seitenlappen (32) bzw. Deckelseitenlappen (34) keilförmig zurückgesetzt sind.

6. Klappschachtel, insbesondere nach Anspruch 1 sowie einem oder mehreren der weiteren Ansprüche, dadurch gekennzeichnet, dass der Kragen (22) im seitlichen, vorderen Bereich eine durch U-förmige bzw. trapezförmige Stanzung gebildete, in Ausgangsstellung in Richtung zur Rückwand (14) bzw. Deckelrückwand (20) gerichtete Verriegelungslasche (42) aufweist, die in Schliessstellung an einer der Deckelvorderwand (17) des Klappdeckels (11) zugekehrten Kante, insbesondere an einer aufrechten Vorderkante (43) des innen liegenden Deckelseitenlappens (33) anliegt.

7. Klappschachtel nach Anspruch 6, dadurch gekennzeichnet, dass die Verriegelungslasche (42) im Bereich der Abschrägung der Kragenlängskante (30) angeordnet ist, benachbart zum oberen Bereich des Schachtelteils (10).

## Claims

1. Folding box of foldable material, such as cardboard or the like, and substantially rectangular shape, in particular to hold a group of cigarettes wrapped in an inner blank, with a box part (10) and a flap lid (11) hinged to a rear wall thereof, which in the closed position surrounds a collar (22) connected to the box part, characterised in that longitudinal edges (26, 27; 28, 29; 30) of the box part (10), of the flap lid (11) and of the collar (22) are angled in adaptation to the diameter of the cigarettes so that the folding box displays an octagonal, equiangular cross-section.

2. Folding box according to Claim 1, characterised in that a base wall (15) and an upper lid wall (21) with bevelled corners (individual corners 37, 38) according to the bevelling of the longitudinal edges (26...29) and without being connected thereto, adjoin the corresponding walls so as to form-close flush with them.

3. Folding box according to Claim 1 or 2, characterised in that side walls (13) or lid side walls (18, 19) are formed from superimposed side flaps (31, 32) or lid side flaps (33, 34) with a width dimensioned so that they mutually overlap only in the area between adjacent individual edges (45, 46) of the longitudinal edges (26...29).

4. Folding box according to Claim 1 and to one or more of the subsequent claims, characterised in that base corner flaps (39) adjoining the (inner) side flaps (32) and lid corner flaps (40) adjoining the inner lid side flaps (33) are of a width smaller than the width of the base wall (15) or upper lid wall (21), i.e. corresponding to the width of the side flaps (31) or lid side flaps (33), between the individual edges (45, 46) of the longitudinal edges (26...29).

5. Folding box according to Claim 1 and to one or more of the subsequent claims, characterised in that inner side flaps (31) or lid side flaps (33) are spaced form one another by wedge-shaped (double) punching (41) so that upper or lower edges of the inner side flaps (31) or lid side flaps (33) are recessed in a wedge shape with respect to the edges of the outer side flaps (32) or lid side flaps (34).

6. Folding box in particular according to Claim 1 and to one or more of the subsequent claims, characterised in that the collar (22) in the lateral front area displays a locking catch (42) formed by U-shaped or trapezoidal punching, turned towards the rear wall (14) or lid rear wall (20) in the initial position, an in the closed position resting against an edge facing the front lid wall (17) of the flap lid (11), and in particular resting against an upright front edge (43) of the inner lid side flap (33).

7. Folding box according to Claim 6, characterised in that the locking catch (42) is located in the bevelled area of the longitudinal collar edge (30), adjacent to the upper area of the box part (10).

## Revendications

1. Boîte à rabat en matière pliable, telle que carton ou analogue, de forme sensiblement parallélépipédique, en particulier pour recevoir un groupe de cigarettes enveloppé dans un flan intérieur, et comportant une partie boîte (10) et un couvercle rabattable (11) articulé à une paroi arrière de celle-ci et qui, en position de fermeture, entoure un collet (22) lié à la partie boîte, caractérisée par le fait que les arêtes longitudinales (26, 27; 28, 29; 30) de la partie boîte (10), du couvercle rabattable (11) et du collet (22) sont chanfreinées en s'adaptant au diamètre des cigarettes de sorte que la boîte à rabat possède une section octogonale à angles égaux.

2. Boîte à rabat selon la revendication 1, caractérisée par le fait qu'une paroi de fond (15) et une paroi supérieure de couvercle (21), à angles chanfreinés (angles individuels 37, 38) à la mesure du chanfrein des arêtes longitudinales (26...29) et sans liaison avec elles, viennent bout à bout contre les parois correspondantes par correspondance de forme.

3. Boîte à rabat selon la revendication 1 ou 2, caractérisée par le fait que les parois latérales (13) ou les parois latérales de couvercle (18, 19) sont formées de languettes latérales superposées (31, 32) ou languettes latérales de couvercle (33, 34) qui sont de largeurs telles qu'elles ne se recouvrent mutuellement que dans la zone comprise entre arêtes individuelles adjacentes (45, 46) des arêtes longitudinales (26...29).

4. Boîte à rabat selon la revendication 1 et l'une ou plusieurs des revendications précédentes, caractérisée par le fait que les languettes d'angle de fond (39) rattachées aux languettes latérales (intérieures) (32) ainsi que les languettes d'angle de couvercle (40) rattachées aux languettes latérales de couvercle, situées à l'intérieur (33), sont de largeur inférieure à celle de la paroi de fond (15) ou paroi supérieure de couvercle (21), à savoir correspondant à la largeur des languettes latérales (31) ou languettes latérales de couvercle (33) entre les arêtes individuelles (45, 46) des arêtes longitudinales (26...29).

5. Boîte à rabat selon la revendication 1 et l'une ou plusieurs des revendications précédentes, caractérisée par le fait que les languettes latérales (31) ou les languettes latérales de couvercle (33), situées à l'intérieur, présentent entre elles un intervalle produit par (double) découpe cunéiforme (41) de telle sorte que les bords supérieurs ou inférieurs des languettes latérales (31) ou languettes latérales de couvercle, intérieures, sont écartés, en coin, des bords des languettes latérales (32) ou languettes latérales de couvercle (34) situées à l'extérieur.

6. Boîte à rabat, en particulier selon la revendication 1 et l'une ou plusieurs des revendications précédentes, caractérisée par le fait que le collet (32) présente, dans la zone avant de côté, une oreille de verrouillage (42), formée par découpe en U ou trapézoïdale, dirigée, en position d'ouverture, vers la paroi arrière (14) ou paroi arrière de couvercle (20) et qui, en position de fermeture, vient porter contre une arête faisant face à la paroi avant (17) du couvercle rabattable (11), en particulier contre une arête avant verticale (43) de la languette latérale de couvercle située à l'intérieur (33).

7. Boîte à rabat selon la revendication 6, caractérisée par le fait que l'oreille de verrouillage (42) est située dans la zone de chanfreinage des arêtes longitudinales de collet (30), au voisinage de la zone supérieure de la partie boîte (10).

Fig.7

Fig.1

Fig. 2

Fig.3

Fig. 4

**Fig. 5**

*Fig.6*